(19) Europäisches Patentamt
European Patent Office
Office européen des brevets

(11) Veröffentlichungsnummer: **0 540 552 B1**

(12) # EUROPÄISCHE PATENTSCHRIFT

(45) Veröffentlichungstag der Patentschrift: **07.09.94**

(51) Int. Cl.⁵: **C04B 22/06**, C04B 28/02, E04C 5/01, //(C04B28/02,22:06, 32:02)

(21) Anmeldenummer: **91912646.6**

(22) Anmeldetag: **04.07.91**

(86) Internationale Anmeldenummer: **PCT/EP91/01252**

(87) Internationale Veröffentlichungsnummer: **WO 92/01643 (06.02.92 92/04)**

(54) **VERFAHREN ZUR HERSTELLUNG KALKHYDRATREICHER BINDEMITTEL FÜR BETONE ODER MÖRTEL UND VERWENDUNG DER SO HERGESTELLTEN BINDEMITTEL.**

(30) Priorität: **21.07.90 DE 4023226**

(43) Veröffentlichungstag der Anmeldung: **12.05.93 Patentblatt 93/19**

(45) Bekanntmachung des Hinweises auf die Patenterteilung: **07.09.94 Patentblatt 94/36**

(84) Benannte Vertragsstaaten: **AT BE CH DE ES FR GB IT LI LU NL**

(56) Entgegenhaltungen:
**EP-A- 0 237 016**
**DE-A- 1 800 103**
**DE-A- 1 945 040**
**DE-A- 2 040 767**
**DE-B- 1 119 731**

(73) Patentinhaber: **INSTITUT FÜR BAUSTOFFPRÜFUNG WALDKIRCH GMBH**
**Waldmattenstrasse 11**
**D-79183 Waldkirch (DE)**

(72) Erfinder: **MOSER, Johann, August**
**Waldmattenstr. 11**
**D-7808 Waldkirch 3 (DE)**
Erfinder: **WISSER, Stefan, Georg**
**Flurstr. 3**
**D-7800 Freiburg (DE)**

(74) Vertreter: **Dreiss, Hosenthien, Fuhlendorf & Partner**
**Gerokstrasse 6**
**D-70188 Stuttgart (DE)**

EP 0 540 552 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Chemical Abstracts, volume 89, No.4, (Columbus, Ohio, US), G. Rehm et al.: "Corrosion Problems of Reinforced Concrete and Prestressed Concrete Constructions", pages 169-199, see abstract No. 29660P, & Corros. Met. Constr., Semin., Meeting Date 1975, 169-99

World Patents Index Latest, Nr. 83-46317k, woche 19, Derwent Publications Ltd, (London, GB), & SU, A, 939594 (MOSCOW MENDELEEV CHEM. IN.) 30. Juni 1982

## Beschreibung

- Es ist bekannt, daß eine Korrosion der Bewehrung im Beton nur stattfinden kann, wenn der pH-Wert unter 9 absinkt und damit die Passivierung aufgehoben wird. Ursache für das Absinken des pH-Wertes ist u.a. eindringendes $CO_2$ aus der Luft. Das in den Zementstein eindiffundierende $CO_2$ wandelt das in der Porenlösung vorhandene Calciumhydroxid zu Calciumcarbonat (Carbonatisierung) um.

  Es findet folgende Reaktion statt:

$$Ca(OH)_2 + CO_2 \xrightarrow{H_2O} CaCO_3 + H_2O$$

  Mit aufgebrauchtem Calciumhydroxid sinkt der pH-Wert des Betons bzw. Mörtels fortschreitend von außen nach innen ab und zwar von ursprünglich ungefähr 12,5 auf etwa 9. Tritt nun hierzu noch Sauerstoff und Feuchtigkeit, kommt es zur Korrosion des Bewehrungsstahles, deren Folgen Bauschäden in Form von Rissen und Abplatzungen im Beton mit z.T. hoher wirtschaftlicher Tragweite sind.
- Durch die Carbonatisierung tritt auch eine Veränderung des Zementsteines ein. Das sich bildende Calciumcarbonat ($CaCO_3$) lagert sich in den Poren des Zementsteines ab und führt so zu einem dichteren und festeren Gefüge, wodurch das Eindringen von Feuchtigkeit und Gasen in den Beton bzw. Mörtel deutlich vermindert wird. Das bedeutet, je mehr Kalkhydrat einerseits zur Bildung von Calciumcarbonat mit seiner abdichtenden Wirkung bzw. andererseits zur Aufrechterhaltung des für die Passivierung des Stahles erforderlichen pH - Wertes im Beton und Mörtel zur Verfügung steht, um so langsamer schreitet das Absinken des pH - Wertes fort.
- Eine vollständige und dauerhafte Verhinderung des Carbonatisierungsfortschrittes zur Vermeidung der Korrosion der Stahlbewehrung in Betonen und Mörteln ist nach dem gegenwärtigen Stand der Technik nicht möglich (1). Als Schutzmaßnahmen werden einerseits direkte Verfahren eingesetzt, bei denen die Oberfläche des Stahles selbst beschichtet wird. Dazu verwendete Stoffsysteme sind:
  - Erdalkalihydroxide und Bitumen (2)
  - Naturöle, Silicate, Mennige und Bitumen (3)
  - Fluorcopolymere (4)
  - Calciumhydroxid (5)
  - Calciumnitrit und Butadienkautschuk (6)
  - Polysiloxane in Mischpolymerisation mit Styrol (7)

  Die Bereitstellung dieser Materialien ist mit z.T. erheblichem wirtschaftlichen Aufwand verbunden und vor allem mit ökologischen und gesundheitlichen Problemen behaftet. Die andererseits gegenwärtig angewendeten indirekten stofflich- verfahrenstechnischen Möglichkeiten, Betone und Mörtel vor dem Eindringen von Gasen zu schützen, sind nur von begrenzter Wirkungsdauer.
- Ziel der vorliegenden Erfindung ist daher, das alkalische Millieu im Beton oder Mörtel gemäß Anspruch 5 dauerhaft zu erhalten. Bei der Erfindung wird davon ausgegangen, daß die Carbonatisierungsgeschwindigkeit und -tiefe vor allem von der Zusammensetzung des Betons oder Mörtels abhängig ist, d.h. es muß dafür gesorgt werden, daß das Calciumhydroxid im Überschuß im Beton oder Mörtel vorliegt, damit der Stahl von Zementstein umgeben ist, der ständig mit Calciumhydroxidlösung gesättigt ist.

  Um dies sicherzustellen, müssen erfindungsgemäß kalkhydratreiche Bindemittel eingesetzt werden. Da Kalkhydrat in der handelsüblichen Form wegen des hohen Wasseranspruchs nur in begrenzter Menge einsetzbar ist, muß das Kalkhydrat verfahrenstechnisch derart modifiziert werden, daß der Wasseranspruch und damit das Schwinden erheblich verringert wird.

  Handelsübliche Zemente führen beim Erhärten herstellungsbedingt zu einem begrenzten Kalkhydratgehalt in Betonen und Mörteln. Zum Beispiel entstehen bei der Erhärtungsreaktion von Portlandzementen maximal ungefähr 30 Gew.-% Kalkhydrat bezogen auf den Zement, d.h. bei einem Beton oder Mörtel mit einem Mischungsverhältnis von Bindemittel zu Zuschlag von 1 zu 6 in Gewichtsteilen ist der Kalkhydratanteil begrenzt auf ungefähr 4 Gew.-% bezogen auf den Trockenbeton bzw. Trockenmörtel.

  Die Erfindung betrifft daher ein Verfahren, welches es ermöglicht, Kalkhydrat durch Pressen zu kompaktieren und es dadurch körnungsmäßig so aufzubereiten, daß sich infolge der kleineren spezifischen Oberfläche des Kalkhydrates der Wasseranspruch verringert. Dazu wird handelsübliches Kalkhydrat mittels Pressen zu Formstücken beliebiger Form und Abmessung gepreßt, ggf. anschließend zerkleinert und gesiebt. Der Preßdruck sollte mindestens 100 N/mm$^2$ betragen. Falls erforderlich, können die gepreßten Formstücke bis zu jeder gewünschten Korngröße zerkleinert werden. In einem Versuch wurde das Schwindmaß sowie der Wasseranspruch eines Mörtels mit handelsüblichem sowie gepreßtem und anschließend zerkleinertem Kalkhydrat ermittelt. Das Mischungsverhältnis von Kalkhydrat zu Sand (Normsand 0/2) lag bei 1 : 2,5 : die Verarbeitbarkeit der Mörtel wurde konstant gehalten. Die Ergebnisse sind in Tabelle 1, Anlage Blatt A1 enthalten.

- Der Carbonatisierungsfortschritt bei Mörteln und Betonen, die gemäß Anspruch 1 und 2 einen erhöhten Kalkhydratgehalt aufweisen, ist bei $CO_2$-Beanspruchung erheblich geringer als bei herkömmlich zusammengesetzten Mörteln und Betonen, d.h. die Alkalität bleibt mit einem pH-Wert >9 über einen erheblich längeren Zeitraum erhalten. Als Nachweis für die Reduzierung des Carbonatisierungsfortschrittes durch den Einsatz von gepreßtem Kalkhydrat wurde folgender Versuch durchgeführt:
  Von einer definierten Mörtelmischung (Rezeptur s.Tabelle 2, Anlage Blatt A1 ) wurden 10, 20 und 30 % des Sandes durch gepreßtes Kalkhydrat ersetzt. Dazu wurde handelsübliches Kalkhydrat in einer Hydraulikpresse mit einem Druck von 120 N/mm$^2$ zu kleinen Platten 7 x 4 x 1 cm gepreßt, zerkleinert und auf eine Korngröße von 0 - 2 mm abgesiebt. Die Kornverteilung ist in Abb.1, Anlage Blatt B1 enthalten. Die Rohdichte des Kalkhydrates betrug 1,63 g/cm$^3$, die Schüttdichte wurde mit 1,19 g/cm$^3$ ermittelt und die Wasseraufnahme lag bei 16,4 Gew.-%. Die gemäß DIN 1164, Teil 7 hergestellten Mörtelprismen lagerten 28 Tage unter Raumklima und anschließend 90 Tage in einer mit $CO_2$ angereicherten Atmosphäre. Die Ergebnisse sind in Abb. 2, Anlage Blatt B2 dargestellt.
  Die Rohdichte des Kalkhydrates kann über den Pressdruck gesteuert werden. Bei einer Erhöhung des Pressdruckes auf 300 bzw. 600 N/mm$^2$ stieg die Rohdichte auf 1,78 bzw. 2,05 g/cm$^3$ und die Wasseraufnahme erniedrigte sich auf 12,5 bzw. 8,7 Gew.-%. Die Schüttdichte des eingesetzten handelsüblichen Kalkhydrates lag bei 0,44 g/cm$^3$.
- Die nach Anspruch 1 und 2 hergestellten Bindemittel können gemäß Anspruch 3 zur Herstellung von Mauer- und Putzmörteln verwendet werden. Diese Mörtel können gemäß Anspruch 2 bis zu 100 % aus Kalkhydrat bestehen. Die Kennwerte eines Mörtels, der aus 100 % Kalkhydrat besteht sind in der Anlage Blatt A2 zusammengestellt. Hinsichtlich der Dauerhaftigkeit von Mörteln sind nach (8) erfahrungsgemäß kalkhydratreiche Ausgangsmischungen besonders gut geeignet, da nach dem Erhärten das Calciumcarbonat in großen Mengen für abdichtende und rißheilende Umlagerungsprozesse zur Verfügung steht. Je mehr Calciumhydroxid bzw. Calciumcarbonat ein Mörtel enthält, um so länger und wirksamer können solche Umlagerungsprozesse stattfinden. Erhöhte Calciumcarbonatgehalte in Form von Kalksteinzuschlag können derartige Umlagerungsprozesse nur begrenzt unterstützen, da bei natürlichem Kalkstein die Größe der Calcitkristalle in der Regel erheblich größer ist und damit die Löslichkeit entsprechend geringer als bei Calciumcarbonat, welches sich in Mörteln aus Calciumhydroxid durch $CO_2$-Aufnahme bildet.
  Bisher gab es keine Möglichkeit, Kalkhydrat in größerer Menge dem Mörtel zuzusetzen. Die nach DIN 1060 geforderte Feinheit der Kalkhydrate und der daraus resultierende hohe Wasseranspruch führen dazu, daß bei einem Kalkhydratgehalt von z.B. 25 Ma.-% bereits während des Erhärtungsprozesses Schwindrisse auftreten. Die Kalkhydratgehalte der derzeit eingesetzten Mörtel sind daher sehr niedrig. Sie liegen bei ungefähr nur 10 Ma-%.

Das erfindungsgemäß durch Pressen modifizierte Kalkhydrat besitzt gegenüber handelsüblichen Kalkhydraten einen wesentlich geringeren Wasseranspruch, siehe Tabelle 1, Anlage Blatt A1 . Es können nun gemäß Anspruch 2 und 3 Mörtel mit höheren Kalkhydratgehalten hergestellt und somit die Dauerhaftigkeit erheblich verbessert werden.

- Die nach Anspruch 1 und 2 hergestellten kalkhydratreichen Bindemittel können auch gemäß Anspruch 6 in mineralischen Beschichtungssystemen zur Verbesserung der Dauerhaftigkeit eingesetzt werden.

Literaturangaben:

1. Jungwirth / Beyer / Grübl : Dauerhafte Betonbauwerke, Beton - Verlag 1986
2. Auslegeschrift 1119731
3. Offenlegungsschrift DE 3806350
4. Offenlegungsschrift DE 3708983 A1
5. Offenlegungsschrift DE 3618478 A1
6. Patentschrift DE 3510818 C2
7. Offenlegungsschrift DE 3503276 A1

8. Wisser, S.: Historische und moderne Mörtel im Verbund mit Naturstein, chemisch-mineralogische und mörteltechnische Eigenschaften; Hochschulsammlung Naturwissenschaft: Mineralogie Bd.1, Hochschulverlag 1989, ISBN 3 - 8107 - 2227 - 8

Tabelle 1

| Vergleich zwischen handelsüblichem und gepreßtem Kalkhydrat bezüglich des Schwindens und der Wasseraufnahme; Prismen 4x4x16 cm | | | |
|---|---|---|---|
| Bindemittel | w/b (-) | s (mm/m) | WA (Vol.-%) |
| Weißkalkhydrat (handelsüblich) | 0,95 | 10 | 33,4 |
| Weißkalkhydrat (gepreßt) | 0,69 | 1,9 | 28,6 |
| Mischungsverhältnis von Kalkhydrat zu Sand = 1: 2,5 in Gewichtsteilen<br>w/b : Wasser/Bindemittelwert<br>$e_s$ : Schwindmaß<br>WA : Wasseraufnahme | | | |

Tabelle 2

| Mörtelrezepturen | |
|---|---|
| Bestandteile | Menge in g/Mischung |
| Zement PZ 35 F | 440 |
| Zuschlagstoff: Quarzsand O/2 | 1320 |
| Wasser | 264 |
| Variationen: Ersatz von Quarzsand durch 10, 20 und 30 Gew.-% Kalkhydrat | |

Tabelle 3: Kennwerte eines Mörtels, der aus 100% Kalkhydrat besteht

Frischmörtelzusammensetzung: 135 g handelsübliches Kalkhydrat nach DIN 1060
1350 g gepreßtes Kalkhydrat (Pressdruck: 600 $N/mm^2$)
435 g Wasser

Korngrößenverteilung des gepreßten und anschließend zerkleinerten Kalkhydrates:

| Korngruppe in mm | 2/4 | 1/2 | 0,5/1 | 0,25/0,5 | 0,125/0,25 | < 0,125 |
|---|---|---|---|---|---|---|
| Kalkhydratanteil in Gew.-% | 29 | 22 | 22 | 13 | 9 | 5 |

Ausbreitmaß nach DIN 18555 : 11 cm

Hergestellte Probekörper: Prismen mit den Abmessungen 4x4x16 cm

Lagerungsbedingungen: 3 Tage in der Schalung und anschließend 14 Tage im Labor

Schwinden des Mörtels: 0,6 mm/m (während 17-tägiger Lagerung)

## Patentansprüche

1. Verfahren zur Herstellung kalkhydratreicher Bindemittel für Betone oder Mörtel, **dadurch gekennzeichnet**, daß bei einem Mindestdruck von 100 $N/mm^2$ gepreßtes Kalkhydrat als Bestandteil des Bindemittels oder als Bindemittel eingesetzt wird.

2. Verfahren gemäß Anspruch 1, dadurch gekennzeichnet, daß bis zu 100% Kalkhydrat eingesetzt wird.

3. Verwendung des nach Anspruch 2 hergestellten Bindemittels als Kalktrockenmörtel.

4. Verfahren nach Anspruch 1, dadurch gekennzeichnet, daß Kalkhydrat mit einer Korngröße von bis zu 16 mm und bis zu 30 Gew.-% bezogen auf Trockenbeton oder Trockenmörtel in Betone oder Mörtel eingesetzt wird.

5. Verwendung der gemäß Anspruch 1 hergestellten Bindemittel zum Korrosionsschutz von Stahlbewehrungen durch Aufrechterhaltung eines pH-Wertes > 9 an der Grenzfläche zwischen Strahlbewehrung und Beton oder Mörtel.

6. Verwendung der gemäß Anspruch 1 oder 2 hergestellten Bindemittel in mineralischen Beschichtungssystemem.

7. Verwendung der gemäß Anspruch 1 oder 2 hergestellten Bindemittel im Bereich der Denkmalpflege.

## Claims

1. Process for producing lime hydrate-rich binders for concretes and mortars, characterised in that lime hydrate pressed at a minimum pressure of 100 $N/mm^2$ is used as a constituent of the binder or as the

binder.

2. Process according to claim 1, characterised in that up to 100 % lime hydrate is used.

3. Use of the binder produced according to claim 2 as a dry lime mortar.

4. Process according to claim 1, characterised in that lime hydrate with a particle size of up to 16 mm and up to 30 % by weight relative to dry concrete or dry mortar is used in concretes or mortars.

5. Use of the binder produced according to claim 1 for protecting steel reinforcements against corrosion by maintaining a pH value > 9 at the interface between the steel reinforcement and the concrete or mortar.

6. Use of the binder produced according to claim 1 or claim 2 in mineral coating systems.

7. Use of the binder produced according to claim 1 or claim 2 in the field of the preservation of monuments.

**Revendications**

1. Procédé pour fabriquer un liant à haute teneur en hydroxyde de calcium pour bétons ou mortiers, caractérisé en ce qu'on utilise un hydroxyde de calcium comprimé sous une pression minimale de 100 $N/mm^2$, comme constituant du liant ou comme liant.

2. Procédé selon la revendication 1, caractérisé en ce qu'on utilise jusqu'à 100 % d'hydroxyde de calcium.

3. Utilisation du liant fabriqué selon la revendication 1, comme mortier de chaux prêt à l'emploi.

4. Procédé selon la revendication 1, caractérisé en ce qu'on utilise dans des bétons ou mortiers de l'hydroxyde de calcium ayant une granulométrie allant jusqu'à 16 mm et en une quantité allant jusqu'à 30 % en poids par rapport au béton prêt à l'emploi ou au mortier prêt à l'emploi.

5. Utilisation du liant fabriqué selon la revendication 1, pour protéger contre la corrosion les armatures métalliques, par maintien d'un pH > 9 au niveau de l'interface entre l'armature en acier et le béton ou le mortier.

6. Utilisation des liants fabriqués selon la revendication 1 ou 2, dans des systèmes de revêtements minéraux.

7. Utilisation des liants fabriqués selon la revendication 1 ou 2, dans le domaine de l'entretien des monuments.

Abb. 1: Sieblinienverlauf des Mörtelsandes und des gepreßten Weißkalkhydrates

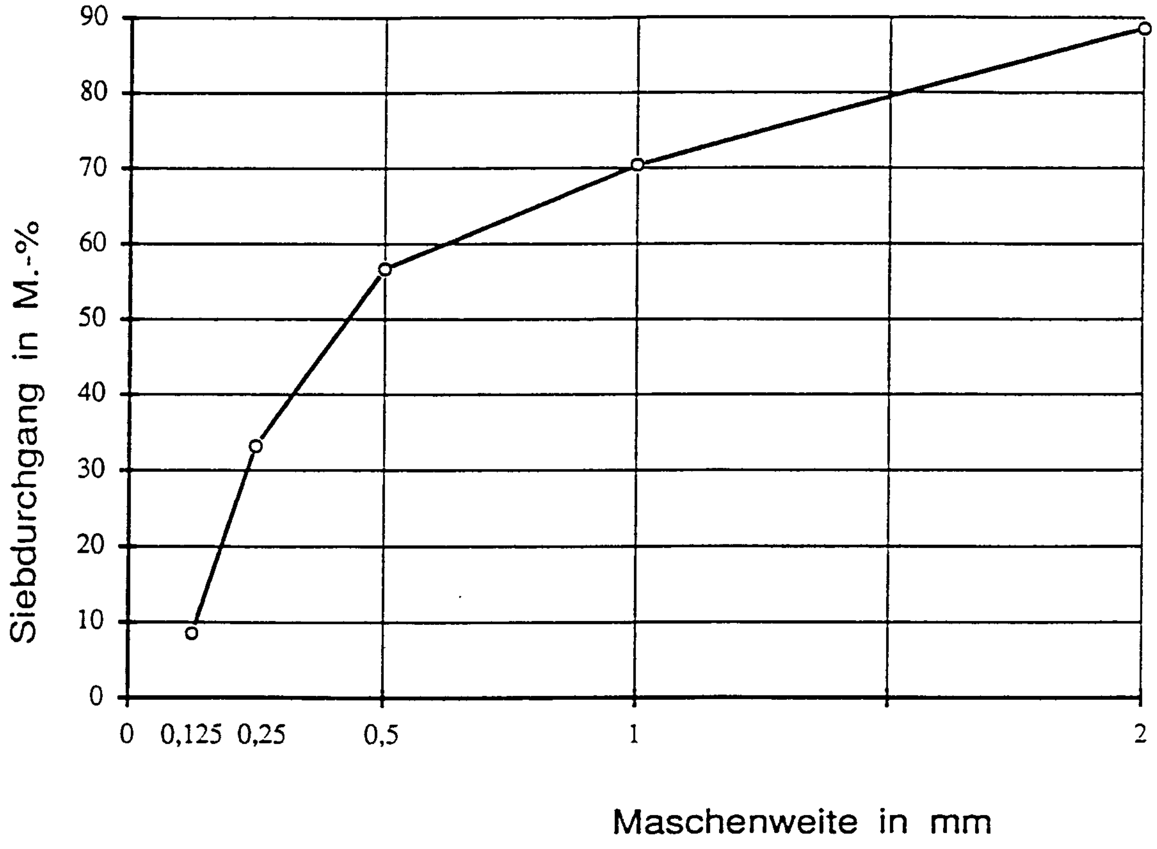

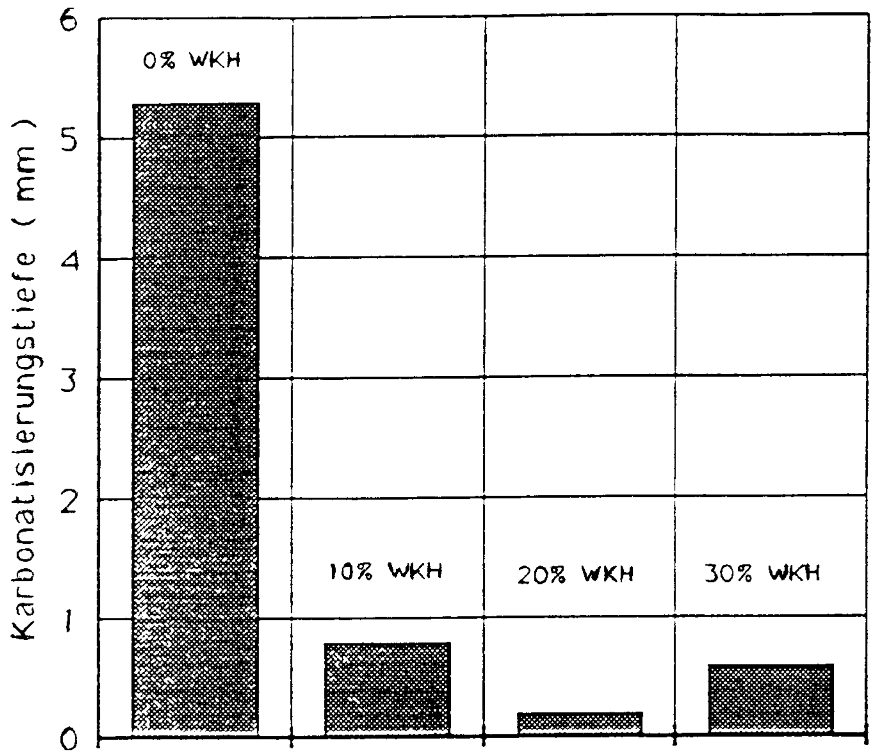


Abb. 2 : Einfluß unterschiedlicher Gehalte an gepreßtem Weißkalkhydrat auf die Carbonatisierungstiefe des Mörtels (w/z - Wert = 0,6)